# EUROPEAN PATENT APPLICATION

(11) **EP 4 485 318 A1**
(43) Date of publication of application: **01.01.2025**
(21) Application number: 24185442.1
(22) Date of filing: 28.06.2024
(51) Int. Cl.: G06Q 20/10, G06Q 20/32, G07F 19/00

(54) **COMMUNICATION WITH A BANK TELLER**

(30) Priority: 30.06.2023 US 202318216687
(71) Applicant: Digital First Holdings LLC, Atlanta GA 30308 (US)
(72) Inventor: McKAIG, Michael, Dundee, DD5 3FR (GB); JAMIESON, Daniel, Angus, DD11 5LF (GB); GROSSI, Daniel, Dundee, DD2 5GT (GB); HORGAN, Kevin, Dundee, DD5 3TB (GB)
(74) Representative: Secerna LLP

(57) **Abstract**

A method and a computing system is disclosed. The method comprises detecting, at an ATM, an input event indicating that a user of the ATM wants to communicate with a bank teller; responsive to detecting the input event, displaying a machine-readable code, comprising information enabling establishment of a communication link with a teller application executing on a computing device of a remote bank teller, on a display of the ATM; and responsive to the user scanning the machine-readable code with the mobile device, establishing, by a mobile application executing on the mobile device, a communication link with the teller application.

## Description

### Field of the Invention

The present invention relates to a method and a computing system for establishing a communication link between a mobile application that is executing on a mobile device of a user that is present at an ATM and a teller application executing on a computing device of a remote bank teller that is able to assist the user with transactions at the ATM. In particular, but not exclusively, the present invention relates to a methodology by which a two-way or bi-directional communication link can be established between applications executing on a user's device and a bank teller's device using QR codes, thus enabling audio and video data to be transmitted directly between devices to facilitate an interactive teller experience at the ATM. This reduces the need for specific hardware at the ATM as no audio or video data is communicated through the ATM and also helps to increase a user's privacy.

### Background

Automated Teller Machines (ATMs) are known. An automated teller machine (ATM) is an electronic banking outlet that allows customers/users to complete basic transactions without the aid of a bank representative or teller. Anyone with a credit card or debit card can access transaction services at most ATMs. ATMs provide both basic cash-dispensing services as well as advanced functions, including: check depositing, account information access, fund transfers, marketing of relevant products and the like. Historically, ATMs have not included any functionality to enable a user to communicate with a remote bank teller. However, newer types of ATM do have additional functionality that enables a user to communicate with a bank teller. These new types of ATMs are sometimes referred to as Interactive Teller Machines (ITMs). ITMs offer the basic components of an ATM, such as the receipt printer and card reader; however, ITMs usually include additional features such as: a video camera and handset for conducting conversations with a teller, a coin dispenser for distributing different denominations of coins, an ID scanner for authenticating the customer, a signature pad and the like.

Interactive Teller solutions today rely on specialised physical hardware on the ATM to allow for the transmission of audio and video content between the user and the teller. Typical placements of this hardware today vary depending on the type of terminal being deployed. On terminals that are designed for a walk-up user, the handset is affixed to the terminal and takes up significant, and valuable, fascia and/or top-box space on the ATM due to the length of the coil required. These solutions provide hardware limitations on smaller footprint terminals where real estate on the fascia and internal to the terminal is at a premium. On drive-up units, the audio functionality of Interactive Teller solutions is typically enabled through public audio speakers from the unit to allow the driver to communicate with the remote teller due to the use of a handset on drive-up units being non-ideal. This raises obvious privacy concerns with a user's personal information being broadcast through an audible public speaker. Using a handset affixed to such an ATM is not an effective solution due to the risk of damage from a user driving off, etc.

These hardware requirements for communication also mean that for an ATM to be upgraded to an ITM in the field there are typically significant hardware upgrades required. On some ATMs it is not possible to upgrade them due to the initial configuration not allowing for ITM-specific modules to be retrofitted. This causes significant expense for an ATM operator.

### Summary

It is an aim of the present invention to at least partly mitigate one or more of the above-mentioned problems.

It is an aim of certain embodiments of the present invention to help establish a communication link between a mobile application on a user's mobile device and a teller application on a bank teller's computing device.

It is an aim of certain embodiments of the present invention to help provide a bi-directional audio-video communication link directly between a user's mobile device and a bank teller's computing device, with no audio-video data being sent to or from an ATM.

It is an aim of certain embodiments of the present invention to help establish a communication link between a bank teller's device and a user's mobile phone such that the need for complex hardware (such as enhanced functionality handsets) can be removed from an ATM.

It is an aim of certain embodiments of the present invention to help enable a bank teller to communicate with a user of an ATM via an interactive virtual teller experience in a way that prevents the use of speakers on the ATM (whose audio may be heard by members of the public), thus increasing a user's data privacy.

It is an aim of certain embodiments of the present invention to help enable hardware limitations to be removed at ATMs, enabling the two-way communication, which is a requirement for Interactive Teller techniques, to be deployed on any ATM even if it was shipped as a non-ITM ATM.

According to a first aspect of the present invention there is provided a computer-implemented method for establishing a communication link between a mobile application executing on a mobile device of a user of an ATM and a teller application executing on a computing device of a remote bank teller, comprising:
detecting, at an ATM, an input event indicating that a user of the ATM wants to communicate with a bank teller;
responsive to detecting the input event, displaying a machine-readable code, comprising information enabling establishment of a communication link with a teller application executing on a computing device of a remote bank teller, on a display of the ATM; and
responsive to the user scanning the machine-readable code with the mobile device, establishing, by a mobile application executing on the mobile device, a communication link with the teller application.

Aptly, the method further comprises:
establishing the communication link as a bi-directional audio and video communication link.

Aptly, the mobile application is a mobile banking application associated with the user's bank.

Aptly, the machine-readable code is a one-dimensional or two-dimensional barcode, and is optionally a quick response code.

Aptly, the method further comprises:
scanning the machine-readable code with a camera of the mobile device using a scanner application integrated into the mobile application.

Aptly, the method further comprises:
scanning the machine-readable code with a camera of the mobile device using a camera application that executes separately to the mobile application; and
responsive to the scanning, initiating the mobile application on the mobile device.

Aptly, the method further comprises:
executing, by the ATM, a terminal application that is configured to communicate with the teller application.

Aptly, the method further comprises:
responsive to executing the terminal application, sending, by the ATM, a notification to the computing device indicating that a communication link needs to be established with the mobile device; and
responsive to receiving the notification, executing, by the computing device, the teller application.

Aptly, the method further comprises:
responsive to the user scanning the machine-readable code with the mobile device, initiating a software module within the mobile application that is configured to communicate with the teller application.

According to a second aspect of the present invention there is provided a computing system, comprising:
an ATM, a mobile device of a user of an ATM and a computing device of a remote bank teller, wherein the ATM is configured to:
detect an input event indicating that the user of the ATM wants to communicate with a bank teller; and
display a machine-readable code, comprising information enabling establishment of a communication link with a teller application executing on a computing device of a remote bank teller, on a display of the ATM; wherein the mobile device is configured to:
establish, by a mobile application executing on the mobile device, a communication link with the teller application responsive to the user scanning the machine-readable code with the mobile device.

According to a third aspect of the present invention there is provided a computer-implemented method for establishing a communication link between a mobile application executing on a mobile device of a user of an ATM and a teller application executing on a computing device of a remote bank teller, comprising:
detecting, at a mobile application executing on a mobile device of a user of an ATM, an input event indicating that the user wants to communicate with a bank teller;
responsive to detecting the input event, by the mobile application, displaying a machine-readable code, comprising information enabling establishment of a communication link with the mobile application, on a display of the mobile device; and
responsive to the ATM scanning the machine-readable code, transmitting the information comprised in the machine-readable code from the ATM to a computing device of a remote bank teller; and
responsive to transmitting said information, establishing, by a teller application executing on the computing device, a communication link with the mobile application.

Aptly, the method further comprises:
establishing the communication link as a bi-directional audio and video communication link.

Aptly, the mobile application is a mobile banking application associated with the user's bank.

Aptly, the machine-readable code is a one-dimensional or two-dimensional barcode, and is optionally a quick response code.

Aptly, the method further comprises:
responsive to the ATM scanning the machine-readable code, executing a terminal application on the ATM that is configured to communicate with the teller application.

Aptly, the method further comprises:
responsive to executing the terminal application, sending, by the ATM, a notification to the computing device indicating that a communication link needs to be established with the mobile device; and
responsive to receiving the notification, executing, by the computing device, the teller application.

Aptly, the method further comprises:
responsive to the teller application receiving the information comprised in the machine-readable code, by the computing device, sending a request to the mobile device to establish a communication link; and
responsive to receiving the request, by the mobile device, initiating a software module within the mobile application that is configured to communicate with the teller application.

Aptly, the method further comprises:
capturing audio data, via a microphone of the mobile device, and optionally capturing video data, via a camera of the mobile device;
via the communication link, transmitting the audio data and optionally the video data from the mobile application to the teller application; and
outputting the audio data via a speaker of the computing device and optionally displaying a video feed comprising the video data on a display of the computing device.

Aptly, the method further comprises:
capturing audio data, via a microphone of the computing device, and optionally capturing video data, via a camera of the computing device;
via the communication link, transmitting the audio data and optionally the video data from the teller application to the mobile application; and
outputting the audio data via a speaker of the mobile device and optionally displaying a video feed comprising the video data on a display of the mobile device.

According to a fourth aspect of the present invention there is provided a computing system, comprising:
an ATM, a mobile device of a user of an ATM and a computing device of a remote bank teller, wherein the mobile device is configured to:
detect, at a mobile application executing on the mobile device, an input event indicating that the user wants to communicate with a bank teller; and
display, by the mobile application, a machine-readable code, comprising information enabling establishment of a communication link with the mobile application, on a display of the mobile device; wherein the ATM is configured to:
   transmit the information comprised in the machine-readable code to the computing device responsive to the ATM scanning the machine-readable code; wherein the computing device is configured to:
   establish, by a teller application executing on the computing device, a communication link with the mobile application.

Certain embodiments of the present invention help eliminate the need for additional hardware to be installed on the terminal to enable ITM transactions, increasing the number of placements that ITMs can be installed in by reducing the pressure on terminal fascia and cabinetry real estate.

Certain embodiments of the present invention help permit the upgrade of an existing ATM to become an ITM, without requiring the physical addition of microphones and cameras to enable Interactive Teller functionality. This effectively permits all ATMs to be extended to have functionality of ITMs.

Certain embodiments of the present invention help provide the ability to deliver ITM functionality in a more private environment through utilizing the user's mobile device for all audio/video content. Utilizing the user's mobile device (and associated peripherals, e.g., headphones) for audio is important in placements such as drive-up or certain walk-up placements where today only public audio is available.

Certain embodiments of the present invention help provide accessibility benefits for terminal users that have physical difficulties in standing for prolonged periods at a terminal, or those who are hard of hearing or hard of sight through the configuration of their mobile device.

### Brief Description of the Drawings

Embodiments of the present invention will now be described hereinafter, by way of example only, with reference to the accompanying drawings in which:
Figure 1 illustrates a computing system;
Figure 2 illustrates the three applications that communicate with one another according to the methodology described herein; and
Figure 3 illustrates a flowchart describing the steps taken to establish a communication link between a computing device of a bank teller and a user's mobile device.

In the drawings like reference numerals refer to like parts.

### Detailed Description

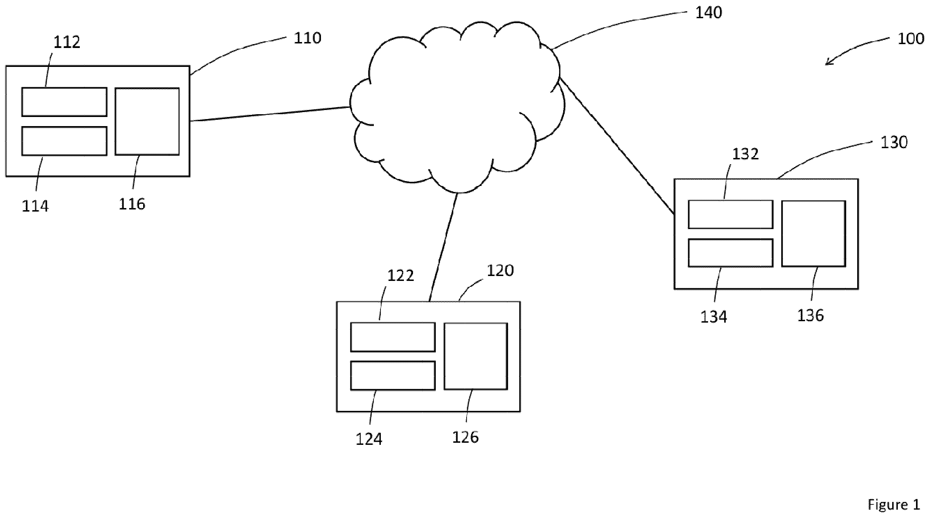

Figure 1 illustrates a computing system 100. In the computing system 100 there is an Automated Teller Machine (ATM) 110, a computing device 120 of a remote bank teller, and a mobile device 130 of a user of the ATM. The ATM may or may not be an Interactive Teller Machine (ITM). The ATM includes one or more processors 112, at least one memory 114 and a display 116. The memory is a non-transitory computer-readable storage medium. The memory 114 stores executable software that is executable by the processors 112 of the ATM. The display 116 displays a graphical user interface for enabling the user to enter details and select options during transactions at the ATM. The executable software of the ATM, when executed by the processor(s), causes the ATM to carry out the methodology described herein. The ATM may also include a communication interface (not shown) for communicating with the computing device 120. The ATM may also include an encrypted PIN pad (not shown), a note dispenser, a receipt printer, a card slot for insertion of a user's bank card (not shown), a contactless reader (not shown), a camera (not shown), a barcode reader (not shown), a microphone, speakers or the like as will be appreciated by a person of skill in the art. When the ATM is an ITM, the ATM may further include additional functionality. For example, the ITM may include a signature pad, an ID scanner, a telephonic handset, a wired headset, a tactile keyboard, a beamforming microphone or the like as will be appreciated by a person of skill in the art. This hardware may not be present on a conventional non-ITM ATM. The ITM may also have functionality to enable an audio and video communication link to be established with a remote teller device. This functionality may not be present on a conventional non-ITM ATM.

The computing device 120 is a computing device of the remote bank teller. For example, the computing device may be a laptop, a desktop computer, a mobile device, a tablet or the like. The computing device 120 also includes one or more processors 122, at least one memory 124 and a display 126. The memory 124 is also a non-transitory computer readable storage medium. The memory 124 stores executable software that is executable by the processors of the computing device. The display 126 also displays a graphical user interface where the remote bank teller may be shown in real-time a virtual desktop corresponding to the screen being shown on the ATM. The computing device may also include a communication interface (not shown) for communicating with the ATM and the mobile device of the user. The computing device may also include a microphone (not shown), speakers (not shown), a camera (not shown) and the like.

The mobile device 130 of the user is for example a smartphone or tablet or the like. The mobile device 130 also includes one or more processors 132, at least one memory 134 and a display 136. The memory 134 is also a non-transitory computer readable storage medium. The memory 134 stores executable software that is executable by the processors of the mobile device. The display 136 also displays a graphical user interface. The mobile device may also include a communication interface (not shown) for communicating with the computing device.

The ATM 110, computing device 120, and mobile device 130 communicate via a network 140. The network 140 may be wired, wireless or a combination of wired and wireless. For example, the network is the internet. It is noted that no direct communication needs to take place between the ATM and the mobile device. In some instances, the ATM and computing device may communicate with each via a separate secured private network whereas the computing device communicates with the mobile device via a public network.

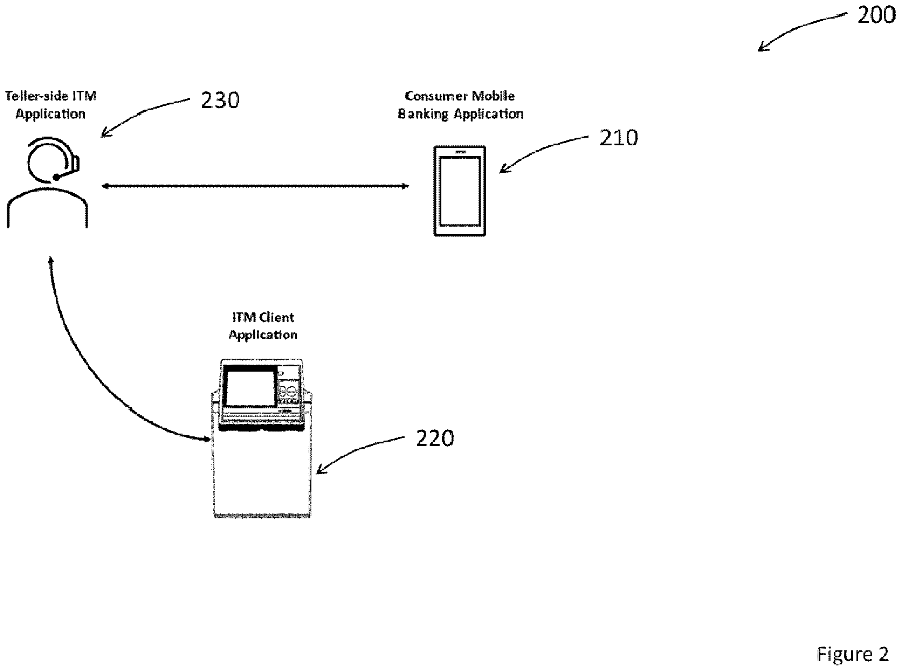

Figure 2 illustrates a system 200 showing the applications that execute on a mobile device of a user of an ATM, a computing device of a remote bank teller and the ATM to perform the methodology described herein. The ATM, mobile device of the user, and computing device may be those as described with reference to Figure 1. In Figure 2, the ATM is an ITM. However, it will be appreciated that in certain other embodiments the ATM may not be an ITM.

On the mobile device, there is executed a mobile application 210. That is, the mobile application is stored in the memory of the mobile device and is executed on processor(s) of that device. The mobile application may be referred to as an 'app'. The mobile application is a mobile banking application associated with the user's bank as will be appreciated by a person of skill in the art. In other words, the mobile application is the individual bank's existing mobile banking application which allows for users to interact with and complete online banking transactions on their mobile device (i.e., it is a Consumer Mobile Banking Application). As described herein, this existing mobile banking application is augmented with an additional module which allows for the transmission of two-way video/audio content through interacting with an application executing on a device of a remote bank teller, utilizing the mobile device's in-built camera and microphone for the transmission of content and the display and speakers for presenting received content. In addition to this, an additional backend service is used that is capable of generating a QR code which provides access to the two-way audio-video communication session that will be linked with the teller application. In other words, compared to current Consumer Mobile Banking Applications, the mobile application described herein is updated with the addition of functionality that allows for two-way audio-video communication with the Teller-side ITM application. This can be achieved in any way that allows for the Application to gather video and audio data using the user mobile device hardware and present audio-video content to the user using the same. The Consumer Mobile Banking Application and associated technology also integrates a backend service that is capable of generating a QR code which will provide the mobile application with access to the two-way audio-video session it will use for communication with the teller application .

On the computing device of the remote bank teller, there is executed a teller application. That is, the teller application is stored in the memory of the computing device and is executed on processor(s) of that device. The teller application is an application that executes on the computing device of the teller. The teller application enables the teller to assist the user with transactions at an ATM (e.g., by controlling the ATM). The teller application may be referred to as a Teller-side ITM Application. As described herein, this application is utilized on a device (e.g., PC, laptop) within the bank's call centre or branch. This application is how the member of bank staff interacts with the ATM and can perform transactions on the user's behalf. As will be appreciated by a person of skill in the art, these types of application are currently utilized by a member of bank staff to transmit video & audio content of the bank member of staff, collected through a video camera and microphone, to the terminal application executing on the ATM (referred to as the ITM Client Application) and for receiving video/audio content from the ITM Client Application. However, according to the new methodology described herein, this two-way audio is instead transmitted between the Teller-side ITM Application and the Consumer Mobile Banking Application directly. That is, no audio or video data is sent from the teller application to the terminal application, or vice versa. However, the Teller-side ITM Application still behaves as it does currently for other functions such as driving transactions, authenticating users etc but all audio-video content is received/transmitted from/to the Consumer Mobile Banking Application instead of the ITM Client Application. In other words, compared to current Teller-side ITM Applications, the teller application described herein communicates audio-video content to the Consumer Mobile Banking Application instead of an ITM Client Application. All other integration with the ITM Client Application remains as-is.

On the ATM, there is executed a terminal application. That is, the terminal application is stored in the memory of the ATM and is executed on processor(s) of the ATM. The terminal application may be referred to as an ITM Client Application. The terminal application is deployed on the terminal and used to instruct the terminal on transactions. Currently, this type of application utilizes cameras and a microphone on the terminal to capture the user and transmit it to the Teller-side ITM Application. However, according to the new methodology described herein, the camera and microphone on the terminal is not utilized/required. As described herein, no direct connection is made between the mobile device and the ATM and no data is shared between them. The only interaction is the scanning of a machine-readable code by either the ATM or the mobile device. The transaction flow between the ITM Client Application and the Teller-side ITM Application however remains unchanged with all existing transactions and modules maintained. This thus still enables the teller to assist the user in the completion of any given transaction(s). Fundamentally, the authentication of the user to allow for any transactions also remains unchanged and is not impacted by this change on the method of communication, using existing PCI compliant methods for standard transactions (eg. Chip & pin, contactless NFC) and for extended transactions, still utilizing other devices (eg. ID scanners and/or passport recognition). The only change in approach described herein is in the method for two-way audio-video communication. That is to say, the ITM Client Application behaves similarly to how current applications work except for not transmitting or receiving audio/video content from the Teller-side ITM Application. In other words, compared to current ITM Client Applications, the terminal application described herein does not have any audio-video functionality. That is to say, instead of gathering and transmitting, and receiving and presenting, audio-video content, the ITM Client Application will only be responsible for handling the transactions and instructing the terminal. The ITM Client Application also integrates a backend service that is capable of generating a QR code which will provide the mobile application with access to the two-way audio-video session it will use for communication with the teller application.

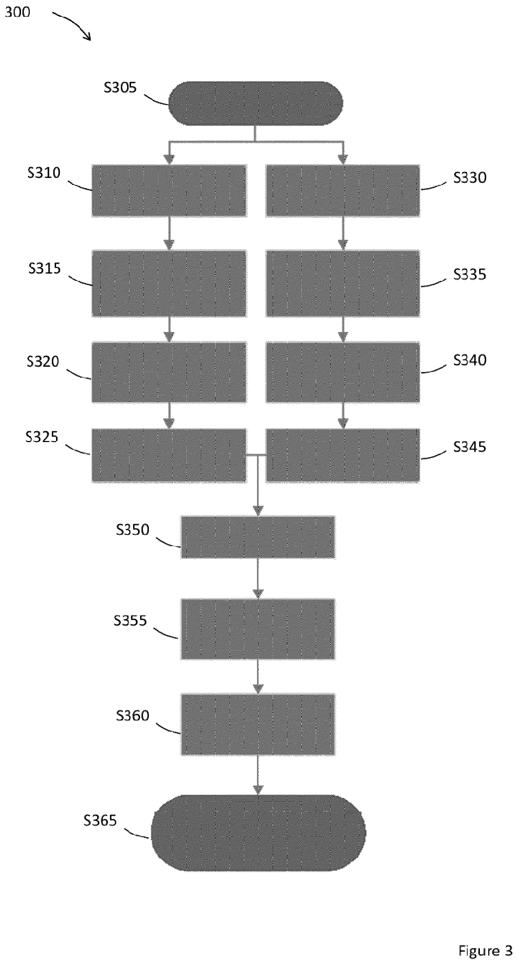

Figure 3 illustrates a flowchart 300 describing how a communication link is established between a mobile application executing on a mobile device of a user of an ATM and a teller application executing on a computing device of a remote bank teller. The ATM, mobile device of the user, and computing device may be those as described with reference to Figure 1. In Figure 2, the ATM is a non-ITM ATM. However, it will be appreciated that in certain other embodiments the ATM may be an ITM.

At a first step S305, a user approaches an ATM to begin a transaction. The ATM may be a through-the-wall ATM, in a bank branch, in a drive-up location, external free-standing placement or the like. The ATM may be an ITM. Thereafter, the user can indicate that they would like to communicate with a bank teller via one of two methods. According to a first method, in a step S310, the user makes a selection via the display or a keypad of the ATM that they would like to communicate with a bank teller. This selection is detected as an input event by the ATM that the user would like to communicate with a bank teller. Once this selection occurs, in some embodiments the ATM may present an interface asking the user to authenticate. For example, the ATM may request that the user inserts a bank card into a card slot of the ATM or scan their card on a contactless reader of the ATM and then enter their PIN. The user is then authenticated. If the user is correctly authenticated, the transaction proceeds. If not, the user may have to repeat the authentication process. Alternatively or additionally, the user may not be authenticated until a communication link is established between the devices of the bank teller and the user. In this case, the bank teller may authenticate the user by visually comparing the user's appearance to that of an appearance on the user's ID card/Passport or the like.

Following the ATM detecting that the user wants to communicate with a bank teller, in a step S315, a machine-readable code (e.g., a QR code) is generated by a backend service of the bank and is then displayed on the display of the ATM. The code includes information that enables a communication link to be established with a teller application executing on a computing device of a remote bank teller. That is to say, once scanned by a mobile device, the information in the QR code can be read and leads to a communication link being established with the teller application. The machine-readable (QR) code thus enables a connection to be made to an audio-video session. In a step S320, the user scans the machine-readable code with their mobile device. This can be achieved in multiple ways. For example, a scanner application integrated into the mobile banking application may be used in conjunction with the mobile device's camera to scan the code. Alternatively, a camera application (that is not part of the mobile application) may be used in conjunction with the camera to scan the code. In this latter approach, scanning of the code causes the device's mobile banking application to be initiated.

Once the user has scanned the code, in a step S325, a terminal application that is configured to communicate with the teller application on the computing device of the remote teller is executed and also a software module that is integrated into the mobile banking application is initiated. This module is configured to communicate with the teller application via a bi-directional audio-video link. It will be appreciated that the terminal application may be executed upon a preset time period elapsing following display of the code or via a user indicating that they have scanned the code or the like. It will also be appreciated that in some embodiments the terminal application may be executed after the input event is detected. In this case, the backend service for generating the machine-readable code and its display may be integrated into the terminal application.

Once the terminal application has been initiated, the teller application is also activated/executed in a step S350. This may be achieved by the ATM sending a notification to the computing device of the teller and the computing device executing the teller application in response to receipt of this notification. Thereafter, in a step S355, a communication link is established between the mobile application and the teller application via the mobile application using the information included in the scanned code. This communication link is a bi-directional audio and video communication link that allows an audio-video feed to be transmitted between the mobile application and the teller application which allows for verbal and visual communication between the user and the teller staff. There is no audio-video feed established on the terminal. Via this communication link, at the bank teller's device, an audio feed is received from the mobile device including audio data captured via the microphone of the mobile device. The audio feed is output via speaker's of the bank teller's device. This audio feed may be transmitted over the internet (e.g., via Wi-Fi, cellular data etc.). In some embodiments, a video feed may also be received (in addition to the audio feed) at the bank teller's device. The video feed may be transmitted from the user's mobile device to the bank teller's device based on video data captured by the camera of the user's mobile device. At the user's mobile device, an audio feed is received including audio data captured via a microphone of the bank teller's device. This audio feed may be output by the mobile device's speakers. This audio feed may also be transmitted over the internet (e.g., via Wi-Fi, cellular data etc.). In some embodiments, a video feed of the bank teller may also be provided to the user. For example, a video feed including video data captured by a camera of the bank teller's device may be transmitted to and displayed on a display of the user's mobile device. Thus, it is possible to establish a two-way audio-video communication link between the user's device and the bank teller's device.

This first approach can be summarised as follows. The user approaches the terminal and selects a control on the display of the ATM which is in the effect of "Speak with a Teller" to trigger Interactive Teller functionality. Once this has been selected, a QR code is created using a backend service and integrated with the Teller-side ITM Application, and is transmitted to and displayed on the ATM. The user scans this QR code on their mobile device - either using the device's camera or an integrated scanner in the Consumer Mobile Banking Application - which initiates an ITM module/functionality on the Consumer Mobile Banking Application which will serve as the module for the two-way communication. Once this is done, the ITM Client Application is also initiated on the terminal.

Returning to the second method, once the user approaches the ATM, in a step S330, the user makes a selection into their mobile banking application via the display or a keypad of the mobile device that they would like to communicate with a bank teller. This selection is detected as an input event by the mobile application that the user would like to communicate with a bank teller. Once this selection occurs, in some embodiments the mobile application may instruct the user authenticate on the ATM. For example, the mobile application may request that the user inserts a bank card into a card slot of the ATM or scan their card on a contactless reader of the ATM and then enter their PIN. The user can then be authenticated. If the user is correctly authenticated, the user can confirm this in the mobile application and the transaction proceeds. Once connected, the teller can confirm that the user is correctly verified on the ATM. Alternatively or additionally, the user may not be authenticated until a communication link is established between the devices of the bank teller and the user. In this case, the bank teller may authenticate the user by visually comparing the user's appearance to that of an appearance on a user's ID card.

Following the mobile application detecting that the user wants to communicate with a bank teller, in a step S335, a machine-readable code (e.g., a QR code) is generated by a backend service of the bank and is then displayed on the display of the mobile device. The code includes information that enables a communication link to be established with the mobile application. That is to say, once scanned by the ATM, the information in the QR code can be read and passed to a computing device of a bank teller which enables a communication link to be established with the mobile application. The machine-readable (QR) code thus enables a connection to be made to an audio-video session. In a step S340, the user presents the code to a barcode reader or a camera on the ATM where it is scanned.

Once the ATM has scanned the code, in a step S345, a terminal application that is configured to communicate with the teller application on the computing device of the remote teller is executed and also a software module that is integrated into the mobile banking application is initiated. This module may be initiated due to the computing device requesting that a communication link be established upon receiving the information in the machine-readable code. This module is configured to communicate with the teller application via a bi-directional audio-video link. It will be appreciated that the module may be executed upon a preset time period elapsing following display of the code or via a user indicating that the ATM has scanned the code or the like. It will also be appreciated that in some embodiments the module may be executed after the input event is detected. In this case, the backend service for generating the machine-readable code and its display may be integrated into the module.

Once the terminal application has been initiated, the teller application is also activated/executed in a step S350. This may be achieved by the ATM sending a notification to the computing device of the teller and the computing device executing the teller application in response to receipt of this notification. Thereafter, in a step S355, a communication link is established between the mobile application and the teller application via the teller application using the information included in the scanned code. This communication link is a bi-directional audio and video communication link that allows an audio-video feed to be transmitted between the mobile application and the teller application which allows for verbal and visual communication between the user and the teller staff. There is no audio-video feed established on the terminal. Via this communication link, at the bank teller's device, an audio feed is received from the mobile device including audio data captured via the microphone of the mobile device. The audio feed is output via speaker's of the bank teller's device. This audio feed may be transmitted over the internet (e.g., via Wi-Fi, cellular data etc.). In some embodiments, a video feed may also be received (in addition to the audio feed) at the bank teller's device. The video feed may be transmitted from the user's mobile device to the bank teller's device based on video data captured by the camera of the user's mobile device. At the user's mobile device, an audio feed is received including audio data captured via a microphone of the bank teller's device. This audio feed may be output by the mobile device's speakers. This audio feed may also be transmitted over the internet (e.g., via Wi-Fi, cellular data etc.). In some embodiments, a video feed of the bank teller may also be provided to the user. For example, a video feed including video data captured by a camera of the bank teller's device may be transmitted to and displayed on a display of the user's mobile device. Thus, it is possible to establish a two-way audio-video communication link between the user's device and the bank teller's device.

This second approach can be summarised as follows. The user approaches the terminal. On their mobile device they select "Speak to a Teller at the ATM". A backend service to the Consumer Mobile Banking Application generates a QR code, using a back-end service created by the bank, which is transmitted to and displayed on the user's mobile device. The user then scans this QR Code on the terminal using the integrated barcode reader on the terminal or the portrait camera on the terminal. This triggers the ITM Client Application on the terminal, as well as triggering the ITM module/functionality in the Consumer Mobile Banking Application. Once this is done, the ITM Client Application is also initiated on the terminal.

In a step S360, the user completes the transaction at the ATM with the assistance of the teller (with all video-audio data coming through their mobile device). All other transactions, user flows and forms of authentication currently provided between teller applications and terminal applications remains unchanged.

Once the transaction is complete, in a step S365, the session is terminated. This may be due to the mobile device being put in standby mode or powered down or by the mobile application being closed or by the teller application being closed. When this occurs the audio-video feed between the mobile application and the teller application is disconnected. The terminal application is closed and the terminal returns to the standard non-interactive terminal application. The mobile application may also close the module and returns to its standard screens.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A computer-implemented method for establishing a communication link between a mobile application executing on a mobile device of a user of an ATM and a teller application executing on a computing device of a remote bank teller, comprising the steps of:
detecting, at an ATM, an input event indicating that a user of the ATM wants to communicate with a bank teller;
responsive to detecting the input event, displaying a machine-readable code, comprising information enabling establishment of a communication link with a teller application executing on a computing device of a remote bank teller, on a display of the ATM; and
responsive to the user scanning the machine-readable code with the mobile device, establishing, by a mobile application executing on the mobile device, a communication link with the teller application.

2. The method as claimed in claim 1, further comprising:
establishing the communication link as a bi-directional audio and video communication link.

3. The method as claimed in claim 1 or claim 2, wherein the mobile application is a mobile banking application associated with the user's bank; and/or
wherein the machine-readable code is a one-dimensional or two-dimensional barcode, and is optionally a quick response code.

4. The method as claim in any preceding claim, further comprising:
scanning the machine-readable code with a camera of the mobile device using a scanner application integrated into the mobile application.

5. The method as claimed in any of claims 1 to 3, further comprising:
scanning the machine-readable code with a camera of the mobile device using a camera application that executes separately to the mobile application; and
responsive to the scanning, initiating the mobile application on the mobile device.

6. The method as claimed in any preceding claim, further comprising:
executing, by the ATM, a terminal application that is configured to communicate with the teller application; and optionally
responsive to executing the terminal application, sending, by the ATM, a notification to the computing device indicating that a communication link needs to be established with the mobile device; and
responsive to receiving the notification, executing, by the computing device, the teller application.

7. The method as claimed in any preceding claim, further comprising:
responsive to the user scanning the machine-readable code with the mobile device, initiating a software module within the mobile application that is configured to communicate with the teller application.

8. A computing system, comprising:
an ATM, a mobile device of a user of an ATM and a computing device of a remote bank teller, wherein the ATM is configured to:
detect an input event indicating that the user of the ATM wants to communicate with a bank teller; and
display a machine-readable code, comprising information enabling establishment of a communication link with a teller application executing on a computing device of a remote bank teller, on a display of the ATM; wherein the mobile device is configured to:
establish, by a mobile application executing on the mobile device, a communication link with the teller application responsive to the user scanning the machine-readable code with the mobile device.

9. A computer-implemented method for establishing a communication link between a mobile application executing on a mobile device of a user of an ATM and a teller application executing on a computing device of a remote bank teller, comprising the steps of:
detecting, at a mobile application executing on a mobile device of a user of an ATM, an input event indicating that the user wants to communicate with a bank teller;
responsive to detecting the input event, by the mobile application, displaying a machine-readable code, comprising information enabling establishment of a communication link with the mobile application, on a display of the mobile device; and
responsive to the ATM scanning the machine-readable code, transmitting the information comprised in the machine-readable code from the ATM to a computing device of a remote bank teller; and
responsive to transmitting said information, establishing, by a teller application executing on the computing device, a communication link with the mobile application.

10. The method as claimed in claim 9, further comprising:
establishing the communication link as a bi-directional audio and video communication link; and/or wherein the mobile application is a mobile banking application associated with the user's bank.

11. The method as claimed in any of claims 9 or 10, wherein the machine-readable code is a one-dimensional or two-dimensional barcode, and is optionally a quick response code.

12. The method as claimed in any of claims 9 to 11, further comprising:
responsive to the ATM scanning the machine-readable code, executing a terminal application on the ATM that is configured to communicate with the teller application; and optionally
responsive to executing the terminal application, sending, by the ATM, a notification to the computing device indicating that a communication link needs to be established with the mobile device; and
responsive to receiving the notification, executing, by the computing device, the teller application.

13. The method as claimed in any of claims 9 to 12, further comprising:
responsive to the teller application receiving the information comprised in the machine-readable code, by the computing device, sending a request to the mobile device to establish a communication link; and
responsive to receiving the request, by the mobile device, initiating a software module within the mobile application that is configured to communicate with the teller application.

14. The method as claimed in any of claims 1 to 7 or 9 to 13, further comprising:
capturing audio data, via a microphone of the mobile device, and optionally capturing video data, via a camera of the mobile device;
via the communication link, transmitting the audio data and optionally the video data from the mobile application to the teller application; and
outputting the audio data via a speaker of the computing device and optionally displaying a video feed comprising the video data on a display of the computing device; and/or
capturing audio data, via a microphone of the computing device, and optionally capturing video data, via a camera of the computing device;
via the communication link, transmitting the audio data and optionally the video data from the teller application to the mobile application; and
outputting the audio data via a speaker of the mobile device and optionally displaying a video feed comprising the video data on a display of the mobile device.

15. A computing system, comprising:
an ATM, a mobile device of a user of an ATM and a computing device of a remote bank teller, wherein the mobile device is configured to:
detect, at a mobile application executing on the mobile device, an input event indicating that the user wants to communicate with a bank teller; and
display, by the mobile application, a machine-readable code, comprising information enabling establishment of a communication link with the mobile application, on a display of the mobile device; wherein the ATM is configured to:
transmit the information comprised in the machine-readable code to the computing device responsive to the ATM scanning the machine-readable code; wherein the computing device is configured to:
establish, by a teller application executing on the computing device, a communication link with the mobile application.
